# EUROPÄISCHE PATENTSCHRIFT

(11) **EP 3 419 896 B1**
(45) Veröffentlichungstag und Bekanntmachung des Hinweises auf die Patenterteilung: **20.12.2023**
(21) Anmeldenummer: 17709925.6
(22) Anmeldetag: 24.02.2017
(51) Int. Cl.: B60N 2/70, B64D 11/06, A47C 7/20

(54) **SITZKISSEN FÜR EINEN FAHRZEUGSITZ, INSBESONDERE EINEN FLUGZEUGSITZ**
SEAT CUSHION FOR A VEHICLE SEAT, IN PARTICULAR AN AIRCRAFT SEAT
COUSSIN DE SIÈGE POUR UN SIÈGE DE VÉHICULE, EN PARTICULIER UN SIÈGE D'AVION

(30) Priorität: 26.02.2016 EP 16157701
(43) Veröffentlichungstag der Anmeldung: 02.01.2019
(73) Patentinhaber: NEVEON Austria GmbH, 4550 Kremsmünster (AT)
(72) Erfinder: HESSENBERGER, Norbert Karl, 4694 Ohlsdorf (AT)
(74) Vertreter: Maikowski & Ninnemann Patentanwälte Partnerschaft mbB
(86) Internationale Anmeldenummer: PCT/EP2017/054330
(87) Internationale Veröffentlichungsnummer: WO 2017/144662

(56) Entgegenhaltungen:
- WO-A2-2013/096985
- US-A- 3 259 435
- US-A- 3 389 935
- US-A1- 2013 247 303
- US-A1- 2014 239 678

## Beschreibung

Die vorliegende Erfindung betrifft ein Sitzkissen für einen Fahrzeugsitz und einen Fahrzeugsitz umfassend solch ein Sitzkissen.

Fahrzeugsitze, insbesondere für Flugzeuge, umfassen neben einer Rückenlehne typischerweise Sitzelemente mit Sitzkissen, die auf einem geeigneten Traggestell befestigt sind.

Derartige Sitzkissen werden aus einem Polster aus Kunststoff oder natürlichen Materialien hergestellt, wobei die Verwendung von Kunststoffschaum aus verschiedenen Gründen bevorzugt ist. So werden Sitzpolster insbesondere im Flugverkehr aus verschiedenen, mit Flammschutzmitteln versehenen offenzelligen elastischen Weichschaumstoffen mit unterschiedlichen Raumgewichten zusammengeklebt.

Es ist ebenfalls bekannt, Fahrzeugpolster aus Vliesen bzw. Vliesstoffen herzustellen, wobei Lagen aus einzelnen Fasern bzw. Fäden aus Kunststoff auf ein Trägermaterial aufgebracht und durch Nadeln bzw. thermisches Prägen miteinander verbunden werden. Mehrere Lagen aus Nadelvlies können von einem flammenfesten Bezugsstoff umhüllt sein. Zwischen dem Bezugsstoff und den einzelnen Lagen aus Nadelvlies können zudem zur Verringerung von Schäden Verstärkungsmatten aus Metall oder Glasfasern angeordnet sein.

Aus der EP 609715 B1 ist ein Fahrzeugsitz mit einem Polster mit einem Stützkörper aus einem Kunststoffschaum bekannt, wobei oberhalb und unterhalb des Stützkörpers mehrere Schichten aus weiteren Kunststoffmaterialien angeordnet sind, die miteinander verbunden sind. Diese weiteren Schichten können aus hochtemperaturbeständigen Fasern wie Polypropylen oder Polyamid oder Aramid gebildet sein. Diese mehrschichtigen Polster werden in ein geeignetes Traggestell eingelegt und mit diesem verbunden.

Ein Sitzkissen für einen Fahrzeugsitz, mit den Merkmalen des Oberbegriffs des Anspruchs 1, ist aus US3389935 A bekannt.

Die im Luftverkehr verwendeten Traggestelle für Flugzeugsitze umfassen typischerweise einen festen Rahmen aus metallischen miteinander verbundenen Trägern oder Holmen, an denen die Sitzelemente und Rücklehnen jeweils in geeigneter Weise befestigt werden.

Der vorliegenden Erfindung liegt nunmehr die Aufgabe zugrunde, ein Sitzkissen für einen Fahrzeugsitz, wie zum Beispiel für Flugzeuge bereitzustellen, die ein geringes Gesamtgewicht bei gleichzeitiger hoher mechanischer Stabilität und Festigkeit aufweist und zudem in einfacher Weise am Traggestell für eine Sitzgruppe bzw. einen Fahrzeugsitz befestigt werden können.

Diese Aufgabe wird mit einem Sitzkissen mit den Merkmalen des Anspruchs 1 gelöst.

Entsprechend wird ein Sitzkissen für mindestens einen Fahrzeugsitz, insbesondere einen Flugzeugsitz, umfassend mindestens ein Polster umfassend mindestens eine erste Schicht aus einem Kunststoffmaterial bereitgestellt, wobei in der mindestens einen ersten Kunststoffmaterialschicht mindestens ein Stabilisierungsmittel eingebettet ist, wobei das mindestens eine Stabilisierungsmittel eine gegenüber der ersten Kunststoffmaterialschicht höhere Biegesteifigkeit aufweist.

Das vorliegend in das Sitzkissen eigebettete bzw. eingelagerte Stabilisierungsmittel ist im Vergleich zu dem Kunststoffmaterial des Polsters formstabiler und weist ein hohes Elastizitätsmodul auf. Entsprechend verleiht das Stabilisierungsmittel dem Sitzkissen eine erhöhte mechanische Stabilität und Festigkeit. Ein weiterer Vorteil des eingelagerten Stabilisierungsmittels ist deren Austauschbarkeit, d.h. z.B. im Falle einer Beschädigung des Stabilisierungsmittels bestehen die Möglichkeit der Entnahme des beschädigten Stabilisierungsmittels und dessen Ersatz durch ein neues Teil. Zusätzlich kann mit dem vorliegenden Ansatz das Stabilisierungsmittel auf mögliche Beschädigungen hin untersucht bzw. inspiziert werden.

Die Kennwerte für Sitzkissen werden durch unterschiedliche Härtemessungen oder Raumgewichtmessungen ermittelt. So wird die Kissen- bzw. Polsterkomposition in verschiedene Klassen unterteilt: Leichtgewicht-, Standard-, und Komfortkissen mit einer Gewichtstoleranz +/-10%, einer Härtetoleranz +/-15%, einer Raumgewichtstoleranz (Formschaum) +/-5% und einer Raumgewichtstoleranz (Blockschaum) +/-10%. Die angewendeten dynamischen Testkriterien sind wie folgt: Bei Verwendung von Oberkörper-Rückhaltegurten sind Zugbelastungen in einzelnen Gurten gegeben und dürfen nicht mehr als 1.750 Ibs (7,78 kN) betragen. Wenn Dual - Riemen zum Zurückhalten des Oberkörpers verwendet werden, darf die Gesamtgurt-Zugbelastung nicht mehr als 2.000 Ibs (8,90 kN) betragen. Die maximale Druckbelastung zwischen dem Becken und der Lendenwirbelsäule Spalte darf nicht mehr als 1.500 Ibs (6.67 kN) betragen.

Das vorliegende Sitzkissen weist eine Länge a in einer ersten Erstreckungsrichtung x und eine breite b in einer zweiten Erstreckungsrichtung y auf. Die Erstreckungsrichtung x stellt im eingebauten Zustand des Sitzkissens die in Fahrzeug-, insbesondere Flugzeuglängsrichtung verlaufende Erstreckungsrichtung dar. Die Erstreckungsrichtung y entspricht somit der im eingebauten Zustand des Sitzkissens quer zur Fahrzeug-, insbesondere Flugzeuglängsrichtung verlaufenden Erstreckungsrichtung. Länge a und Breite b des Sitzkissens können dabei gleich oder verschieden voneinander sein, wobei eine Form der Sitzkissens mit b > a bevorzugt ist.

In einer Ausführungsform des vorliegenden Sitzkissens, die nicht beansprucht wird, umfasst das mindestens eine Stabilisierungsmittel voneinander beabstandete Elemente oder mindestens ein flächig ausgebildetes Element.

So kann das mindestens eine Stabilisierungsmittel in einer Variante voneinander beabstandete Rohre, insbesondere Holme umfassen. Diese Rohre, bevorzugt Holme, sind dabei bevorzugt nicht miteinander bzw. untereinander verbunden, sondern sind vielmehr einzeln im Polster angeordnet.

In einer besonders bevorzugten Variante umfasst das mindestens eine Stabilisierungsmittel mindestens 2, bevorzugt 3, bevorzugt 5-7 parallel zueinander angeordnete Holme bzw. Rohre.

Anzahl und Abstand der als Stabilisierungsmittel verwendeten Holme sind insbesondere abhängig von der Breite des Sitzkissens. So werden bevorzugterweise bei einer Sitzkissenbreite zwischen 400 bis 450 mm bis zu 2 oder 3 Holme mit einem gleichmäßigen Abstand zueinander von 100 bis 120 mm verwendet. So kann der Holmabstand bei einer Sitzkissenbreite von 410 mm und 3 Holmen 120 mm betragen.

Als Material für die Holme wird bevorzugt ein Metall, wie zum Beispiel Aluminium, oder auch ein geeignetes Kunststoffmaterial verwendet.

Als besonders bevorzugte Materialien sind Fasern wie Kohlenstofffasern oder Glasfasern vorgesehen. In diesem Falle ist es in einer Variante vorgesehen, das Kernmaterial der Holme aus unidirektional ausgerichteten Fasern zu bilden. Das Oberflächenmaterial kann aus geflochtenen Fasern hergestellt werden. In jedem Fall sind die Fasern in ein Harzsystem eingelagert, wie z.B. in ein Phenolharz oder Epoxidharz.

Die Länge I der Holme wird in Abhängigkeit vom Abstand der (weiter unten beschriebenen) Trägerelemente, auf denen das Sitzkissen befestigt, ausgewählt. Ein weiterer, die Holmlänge I beeinflussender Faktor ist die Sitzkissenlänge a, wobei die Holmlänge I bevorzugt geringer bzw. kleiner ausfällt als die Sitzkissenlänge a. Dies verhindert ein Herausstecken oder Hervorstehen der Holme aus dem Sitzkissen. Die Holmlänge I liegt bevorzugt in einem Bereich zwischen 150 mm und 350 mm, bevorzugt zwischen 200 mm und 300 mm, insbesondere bevorzugt zwischen 250 mm und 280 mm.

Die Holme sind bevorzugt als kreisförmige Zylinder, insbesondere als Hohlzylinder ausgebildet. Der äußere Durchmesser d der Holme kann zwischen 10 und 20 mm, bevorzugt zwischen 12 und 16 mm, insbesondere bevorzugt zwischen 12 und 13 mm betragen. Die Wanddicke liegt in einer Holmvariante zwischen 1 mm und 5 mm, bevorzugt zwischen 1,5 mm und 3 mm, insbesondere bevorzugt zwischen 1,5 mm und 2 mm.

Die Enden der Hohlzylinder können beide jeweils offen oder mit einem Stopfen versehen sein. Es ist auch möglich, dass nur ein Ende offen ist und das gegenüberliegende Ende mit einem Stopfen versehen ist. Die Stopfen können eine Länge zwischen 10 mm und 50 mm, bevorzugt zwischen 20 mm und 40 mm, insbesondere bevorzugt zwischen 25 und 35 mm aufweisen. Die Stopfenlänge ist abhängig von der Holmlänge und kann bei ca. 10 - 15% der Gesamtlänge der Holme liegen.

Erfindungsgemäß umfasst das mindestens eine Stabilisierungsmittel voneinander beabstandete profilierte Trägerschienen.

Die Anzahl der verwendeten Trägerschienen wird wiederum von der Breite des Sitzkissens bestimmt. So können in einer Variante mindestens 2, bevorzugt 3 Trägerschienen im Sitzkissen angeordnet sein. Die Trägerschienen haben einen bevorzugten Mitte-Mitte-Abstand von 100 bis 150 mm, insbesondere von 120 mm. Der Kante-zu-Kante-Abstand beträgt bevorzugt 50 bis 80 mm, bevorzugt 60 bis 65 mm. Bei einer Kissenbreite von 450 mm beträgt der Mindestabstand (Mitte-Mitte) 100 mm.

Die Trägerschienen weisen ein U-Profil oder ein Trapez-Profil auf. Die Wanddicke der Schienen beträgt zwischen 0,5 mm und 5 mm, bevorzugt zwischen 1 und 4 mm, insbesondere bevorzugt zwischen 2 mm und 3 mm. Die Tiefe des U-Profils bzw. Trapez-Profil liegt in einen Bereich zwischen 5 und 15 mm, bevorzugt zwischen 10 und 12 mm.

In einer besonders bevorzugten Ausführungsform ist zumindest ein Seitenende des Trägerschienenprofils wird mit einer Rundung, sprich mit einer Profil-Nase, versehen, um Schädigung des Schaumes durch scharfe Kanten zu verhindern. Die Profilrundung ist bevorzugt auf der Sitzkissenvorderseite (d.h. im Kniekehlenbereich) vorgesehen, kann aber auch beidseitig möglich sein.

Die Trägerschienen bestehen aus einem geeigneten Kunststoffmaterial. Erfindungsgemäß bestehen die Trägerschienen aus Kohlenstofffasern oder Glasfasern.

Die Fasern sind in ein Harzsystem eingelagert, wie z.B. in ein Phenolharz oder Epoxidharz. Die Profilierung der Trägerschienen kann z.B. durch Pressprägung von Fasernasslaminaten oder dem Sheet Molding Compound (SMC) Verfahren erfolgen.

In einer besonders bevorzugten Ausführungsform sind die Trägerschienen mit einem Flammschutzmaterial, insbesondere in Form eines flammfesten Gewebes, versehen, das mit den Trägerschienen in geeigneter Weise verbunden ist.

Ein geeignetes Gewebe umfasst z.B. hochtemperaturfeste Fasern aus Glas, Kunststoff oder Graphit. Besonders bevorzugte temperaturstabile Fasern sind Kunststofffasern auf der Basis von Polypropylen, Polyacrylat oder Polyamiden wie Aramiden oder Polybenzimidazol. Letzteres ist besonders vorteilhaft, wenn die Trägerschiene selbst bereits aus flammfesten Material besteht, andernfalls kann auch flammfestes Gewebe eingesetzt werden.)

In einer bevorzugten Variante besteht das flammfeste Gewebe aus mehreren Lagen aus feuerfesten Material und verpressten Textilien. So kann z.B. eine erste Lage aus hochtemperaturstabilen Fasern, eine zweite (Mittel)lage aus einem Prepreg-Gewebe und eine dritte Lage wiederum aus hochtemperaturstabilen Fasern bestehen.

In einer weiteren Ausführungsform des vorliegenden Sitzkissens, die nicht beansprucht wird, umfasst das mindestens eine Stabilisierungsmittel mehrere voneinander beabstandete Streifen oder Bänder. Die Anzahl der Streifen ist dabei abhängig von der Größe des Sitzkissens und der Breite der Streifen, z.B. kann das Stabilisierungsmittel 2 bis 20 Streifen, bevorzugt 3 bis 10 Streifen umfassen. Die geometrische Anordnung der Streifen im Polster ist vergleichbar zu der oben beschriebenen Anordnung der Holme im Polster.

In einer weitergehenden Variante, die nicht beansprucht wird, sind die als Stabilisierungsmittel verwendeten Streifen mit mindestens zwei parallel zueinander, jedoch vertikal zu den Streifen verlaufenden Streben gekoppelt. In diesem Fall bilden die Streifen mit den Streben eine Art Lattenrost. Die Streifen können aus Metall, Holzwerkstoff, Kunststoff, Gewebe, Gewirke oder einem Geflecht sein.

In einer weiteren bevorzugten Ausführungsform, die nicht beansprucht wird, umfasst das flächig ausgebildete Stabilisierungsmittel mindestens ein flächig ausgebildetes Element aus einem Gewebe, Geflecht, Gewirke, Kunststoff, Metall oder einem Holzwerkstoff. Das flächig ausgebildete Stabilisierungsmittel kann in Form einer Platte vorliegen oder aus einer oder mehreren Lagen eines Gewebes, Geflechts oder Gewirkes bestehen. Die Größe bzw. Dimensionen des flächig ausgebildeten Stabilisierungsmittels sind abhängig von den Abmaßen des Sitzkissens und wird entsprechend angepasst.

Im Falle der oben beschriebenen Verwendung von Holmen oder Schienen als Stabilisierungsmittel können diese in einer Ausführungsform in im Polster vorgesehene Ausnehmungen eingeführt werden und eingebettet werden. In diesem Falle sind in Konkordanz zu der Anzahl der Holme oder Schienen in dem Polster mindestens 2, bevorzugt 3, bevorzugt 5-7 parallel zueinander verlaufende Ausnehmungen vorgesehen.

Die Holme des Stabilisierungsmittels und die die Holme aufnehmenden Ausnehmungen im Polster des Sitzkissens verlaufen im eingebauten Zustand der Sitzkissens in Fahrzeug-, insbesondere Flugzeuglängsrichtung; d.h. die Ausnehmungen sind in der oben definierten Erstreckungsrichtung x des Sitzkissens angeordnet und erstrecken sich bevorzugt über die gesamte Länge a des Sitzkissens. Die Holme als Teil des Stabilisierungsmittels verlaufen somit also ebenfalls parallel zur Erstreckungsrichtung x und somit entlang der Länge a des Sitzkissens.

Die Holme werden bevorzugt über ihre gesamte Länge in den Ausnehmungen aufgenommen. Mit anderen Worten, es ist bevorzugt, dass die Holme vollständig in die Ausnehmungen im Polster eingebettet sind, d.h. die Holme sind vollständig vom Polstermaterial umgeben bzw. umhüllt. Die Ausnehmungen für die Holme werden typischerweise mittels Konturschneidemaschinen in das Kunststoffmaterial des Polsters eingebracht.

In einer besonders bevorzugten Ausführungsform sind die Ausnehmungen für die Holme jeweils in Form eines sich in der ersten Materialschicht verbreiternden Schlitzes oder Spaltes ausgebildet. Die Länge des Schlitzes bzw. Spaltes korrespondiert dabei bevorzugt zur Länge a des Sitzkissens, d.h. der Schlitz verläuft bevorzugt über die gesamte Länge a des Sitzkissens.

Die Tiefe des Schlitzes bzw. Spaltes wird so eingestellt, dass zumindest eine vollständige Umhüllung bzw. Einbettung der Holme im Polster des Sitzkissens ermöglicht wird. Allerdings ist die Tiefe des Schlitzes durch die Dicke des Polsters begrenzt. Die Breite des Schlitzes bzw. Spaltes kann variabel gestaltet sein, und wird aufgrund der bevorzugten Verwendung eines flexiblen Kunststoffschaumes als Material für das Polster möglichst gering ausfallen.

In einer Ausführungsform sind die Ausnehmungen für die Holme jeweils in Form eines Schlitzes bzw. Spaltes mit einer am Ende des Schlitzes bzw. Spaltes (d.h. dem Ende welches mit der Tiefe des Schlitzes korrespondiert) vorgesehenen kreisförmigen Verbreiterung ausgebildet. Die Ausnehmung liegt demnach bevorzugt in Form eines geraden Schlitzes mit einer am Ende des Schlitzes im Polster vorgesehenen kreisförmigen Verbreiterung vor, wobei der Durchmesser der kreisförmigen Verbreiterung größer ist als die Breite des Schlitzes.

Die kreisförmige Verbreiterung der Ausnehmung ist im Übergangsbereich zwischen Schlitz und kreisförmiger Verbreiterung mit einer Nase und einer Verrastung ausgebildet. Somit wird eine Umhüllung und Verankerung der aufgenommenen Holme im Polster ermöglicht. Die Nase ermöglicht ein einfaches Einführen oder Einlegen des Holmes in die kreisförmige Ausnehmung bzw. Verbreiterung des Schlitzes. Die Verrastung dient dem Verrasten oder Hintergreifen des mindestens einen Holmes durch das Material des Polsters und dient damit einer Verankerung (rastender Eingriff) des Holmes im Polster, so dass ein formschlüssiger Verbund zwischen Holm und Polster des Sitzkissens ausgebildet wird.

Bei Verwendung von Trägerschienen als Stabilisierungsmittel werden diese in Analogie zu den Holmen in geeignete Ausnehmungen im (ersten) Kunststoffmaterial eingefügt, so dass eine vollständige Einbettung der Schienen in das Kunststoffmaterial erreicht wird.

Es ist aber auch möglich, die Holme (oder auch die Trägerschienen und weiteren Stabilisierungsmittel) direkt in den Formschaum einzuschäumen.

Die Stabilisierungsmittel können zusätzlich mit dem Kunststoffmaterial des Sitzkissens verklebt werden oder auch nicht.

In einer weiteren Ausführungsform des vorliegenden Sitzkissens ist die Kunststoffmaterialschicht umfassend das mindestens eine Stabilisierungsmittel mit mindestens einer weiteren Kunststoffmaterialschicht gekoppelt.

Die verschiedenen Kunststoffmaterialschichten können dabei unter Verwendung eines Klebers miteinander verbunden sein. Der Kleber bildet hierbei eine durchgehende Kleberschicht und ermöglicht eine Kraft-und formschlüssige Verbindung der mindestens zwei Materialschichten.

Es ist auch vorstellbar, dass die mindestens zwei Kunststoffmaterialschichten des Polsters über mindestens ein Verbindungsmittel, insbesondere Haftbänder oder Flauschbänder, miteinander verbunden sind. Derartige Bänder können z.B. in Form von Klettbändern aus feuerfestem Material vorliegen.

In einer weitergehenden Ausführungsform des vorliegenden Sitzkissens umfasst das Kunststoffmaterial der Schichten einen Kunststoffschaum, bevorzugt aus Polyurethanschaum, Polyethylenschaum, Polyetherschaum, Polyesterschaum, Silikonschaum oder aus einem Kunststoffgewebe, bevorzugt aus Polypropylen, Polyethylen, Polyacrylat.

Bei Verwendung von mehreren Materialschichten (z.B. zwei oder drei) können diese jeweils aus demselben oder aus unterschiedlichen Materialien bestehen. Bevorzugt sind die Materialschichten jeweils einteilig (einstückig) ausgebildet, elastisch, offenzellig und mit einem pulverförmigen Flammschutzmittel versehen (zum Beispiel Melaminharz, Aluminiumhydroxid). Bei Verwendung von Kunststoffschaum als Polstermaterial können in den Kunststoffschaum weitere Fasermaterialien, insbesondere hochtemperaturbeständige Fasern, eingebettet sein. Auf der Oberseite des Sitzkissens (d.h. auf der Seite des Sitzkissens, die als Sitzfläche für den Fahrgast dient) kann ein Bezugsstoff angeordnet sein, der mit des Sitzkissens unter Verwendung eines geeigneten Befestigungsmittels wie Kleber oder Klettband verbunden ist. Wie oben erläutert, bewirkt das Stabilisierungsmittel eine Erhöhung der Stabilität und Festigkeit des Sitzkissens. So erreicht das vorliegende Sitzkissen Biegekräfte zwischen 500 und 1750 N, bevorzugt zwischen 750 und 1550 N und eine Biegefestigkeit zwischen 50 und 450 N/mm², bevorzugt zwischen 100 und 250 N/mm² auf. Die Biegesteifigkeiten liegen zwischen 10.000 und 120.000 N/mm², bevorzugt zwischen 10.000 und 50.000 N/mm².

Es ist weiterhin bevorzugt, wenn das Sitzkissen mit mindestens einem Trägerelement als Teil eines Traggestells des mindestens einen Fahrzeugsitzes gekoppelt ist. Insbesondere ist vorgesehen, dass das Sitzkissen an dem mindestens einem Trägerelement mittels eines Befestigungsmittels, insbesondere in Form von Haftbändern oder Flauschbändern, befestigt ist. Es ist auch denkbar, dass die Befestigungsmittel bereits in das Stabilisierungsmittel (mittels SMC bzw. Pressprägung) eingearbeitet werden.

In einer Ausführungsform umfasst das Trägerelement mindestens zwei parallel zueinander angeordnete Streben oder Holme. Die Holme des Trägerelementes verlaufen im eingebauten Zustand des Sitzkissens und des Fahrzeugsitzes quer zur Fahrzeug-, insbesondere Flugzeuglängsrichtung; d.h. die Holme des Trägerelementes verlaufen parallel zur Erstreckungsrichtung y und daher parallel zur Breite b des Sitzkissens.

Die Erfindung wird nachfolgend unter Bezugnahme auf die Figuren der Zeichnungen näher erläutert. Es zeigen:
- Figur 1: eine schematische Ansicht eines Sitzkissens,
- Figur 2: eine erste schematische Ansicht der Unterseite einer ersten Ausführungsform des Sitzkissens,
- Figur 3: eine zweite schematische Ansicht der Unterseite der in Figur 2 gezeigten Ausführungsform des Sitzkissens,
- Figur 4: eine erste schematische Querschnittsansicht der in Figur 2 gezeigten Ausführungsform des Sitzkissens; und
- Figur 5: eine zweite schematische Querschnittsansicht der in Figur 2 gezeigten Ausführungsform des Sitzkissens.
- Figur 6: eine erste schematische Ansicht der Unterseite einer zweiten Ausführungsform des Sitzkissens,
- Figur 7: eine zweite schematische Ansicht der Unterseite der in Figur 6 gezeigten Ausführungsform des Sitzkissens; und
- Figur 8A: eine schematische Ansicht einer dritten Ausführungsform des Sitzkissens mit Trägerschienen;
- Figur 8B: eine schematische Querschnittsansicht einer Trägerschiene; und
- Figur 8C: eine schematische Ansicht von Trägerschienen (ohne Polster) angeordnet auf einem Traggestell.

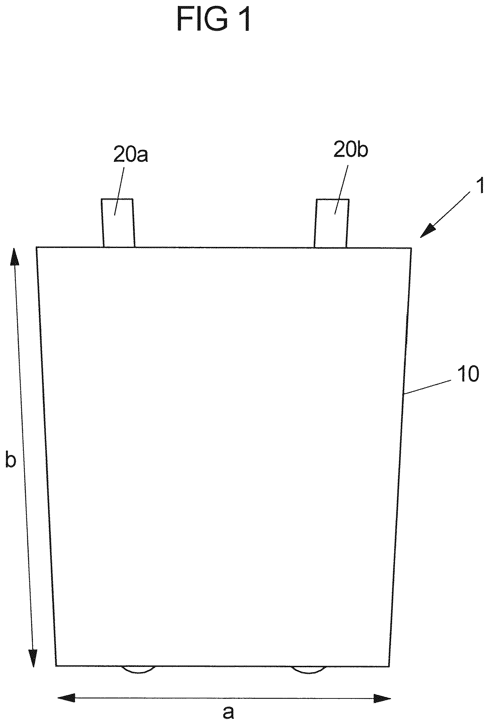

Die in Figur 1 gezeigte Ausführungsform des vorliegenden Sitzkissens 1 für einen Flugzeugsitz umfasst ein Polster 10 mit einem Bezugsstoff, wobei das Sitzkissen auf zwei Holmen bzw. Streben 20a, 20b als Teil des Traggestells des Sitzes angeordnet ist. Die Holme 20a, 20b als Teil des Traggestells des Flugzeugsitzes verlaufen quer zur Flugzeuglängsrichtung. Die Holme 20a, 20b sind vorliegend als Hohlzylinder aus metallischem Material (zum Beispiel Aluminium) ausgebildet.

Das Polster 10 des Sitzkissens 1 dient als Sitzfläche für einen Flugzeugpassagier und weist Abrundungen der Sitzfläche in dem Bereich auf, an dem die Beine des Passagiers auf der Sitzfläche auf- bzw. anliegen.

Das Sitzkissen 1 mit dem Polster 10 weist eine Länge a (in Flugzeuglängsrichtung) und eine Breite b (quer zur Flugzeuglängsrichtung) auf. Die Ausformungen der Sitzfläche des Sitzkissens beeinflussen den Sitzkomfort des Fahrgastes.

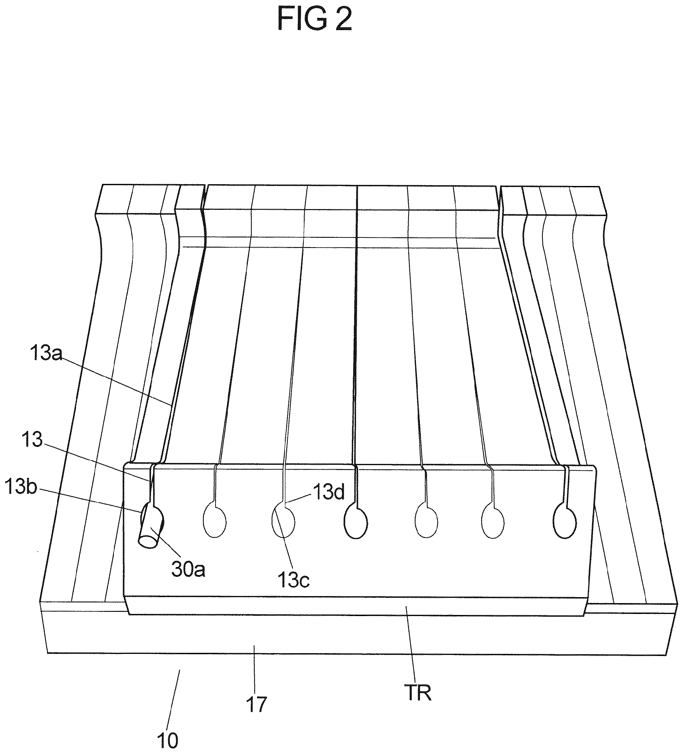

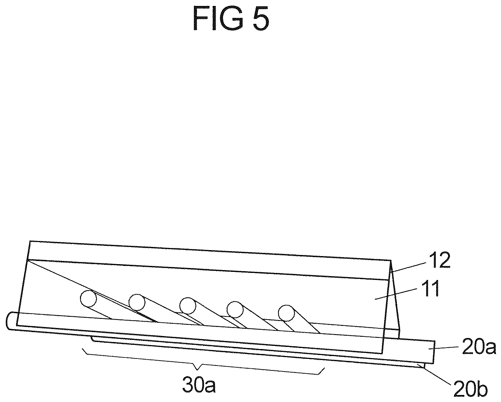

In den Figuren 2-7 sind die einzelnen strukturellen Merkmale von Ausführungsformen des vorliegenden Sitzkissens aufgezeigt.

Das Polster 10 der Sitzkissens 1 in einer ersten Ausführungsform (Figuren 2-5), die nicht beansprucht wird, ist im Detail in einer Draufsicht auf die Unterseite in Figur 2 dargestellt. Das Polster 10 umfasst eine erste Materialschicht 11, die bevorzugt aus Polyesterschaum oder Polyurethanschaum (als Formschaum) besteht, und eine mit der ersten Materialschicht 11 gekoppelte bzw. verbundene zweite Materialschicht 12, die zum Beispiel aus einem Polyurethanschaum besteht. Erste Materialschicht 11 und zweite Materialschicht 12 sind zum Beispiel mittels einer Kleberschicht verbunden.

In der ersten Materialschicht 11 sind Ausnehmungen 13 zur Aufnahme von Holmen 30a als Stabilisierungsmittel (Figur 2) vorgesehen, wobei die Anzahl der Ausnehmungen variabel in Abhängigkeit von den aufzunehmenden Holmen 30a gestaltet ist.

Die Ausnehmungen 13 sind in Form eines Schlitzes oder Spaltes ausgebildet und verlaufen parallel zur Seite a des Polsters 10 (d.h. in Flugzeuglängsrichtung), wobei vorliegend die Länge der Ausnehmung so gestaltet ist, um Holme 30a als Stabilisierungsmittel in ihrer gesamten Länge aufnehmen zu können.

Die Länge der Ausnehmung 13 in Form eines Schlitzes entspricht ungefähr der Länge a des Sitzkissens bzw. Polsters 10. Die Ausnehmung 13 umfasst einen Schlitz 13a und eine kreisförmige Verbreiterung 13b. Die Dimensionen des Schlitzes und insbesondere der kreisförmigen Verbreiterung 13b sind dabei so gestaltet, dass eine vollständige Einbettung eines Holmes 30a erfolgen kann; d.h., dass der Holm 30a vollständig in den Kunststoff der ersten Materialschicht eingebettet vorliegt bzw. von dieser umschlossen ist.

Die kreisförmige Verbreiterung 13b ist im Übergangsbereich mit dem Schlitz bzw. mit der Spalte 13a mit einer Nase 13c und einer Verrastung bzw. einem Hintergriff 13d ausgebildet. Die Nase 13c ermöglicht ein einfaches Einführen oder Einlegen des Holmes 30 des ersten Trägerelementes in die kreisförmige Ausnehmung bzw. Verbreiterung; während der Hintergriff 13d einer Verankerung des Holmes 30a in der ersten Materialschicht dient, so dass ein formschlüssiger Verbund zwischen Holm 30a und erster Materialschicht 11 des Polsters 10 des Sitzkissens 1 ausgebildet wird.

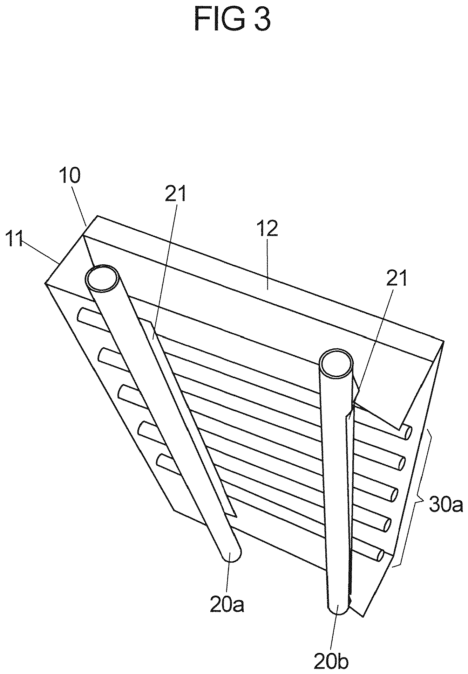

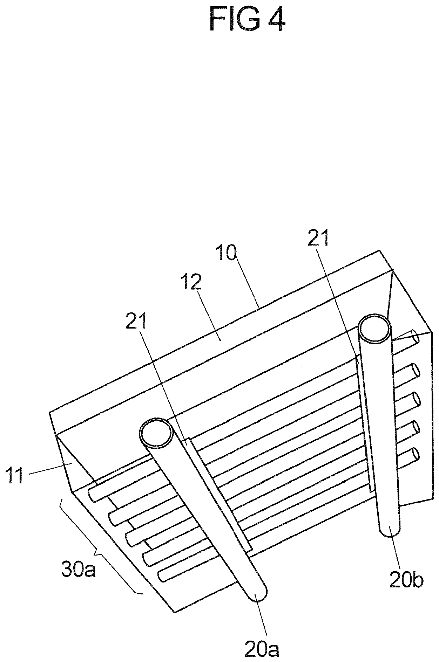

Zur Befestigung bzw. Kopplung des Sitzkissens 1 auf den Holmen 20a, 20b als Teil des Traggestells wird das Sitzkissen 1 mittels geeigneter Haftbänder 21 an den Holmen 20a, 20b befestigt (siehe Figur 3 und 4).

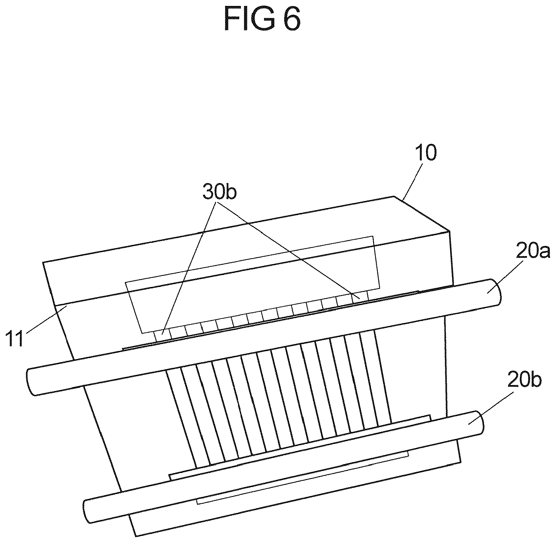

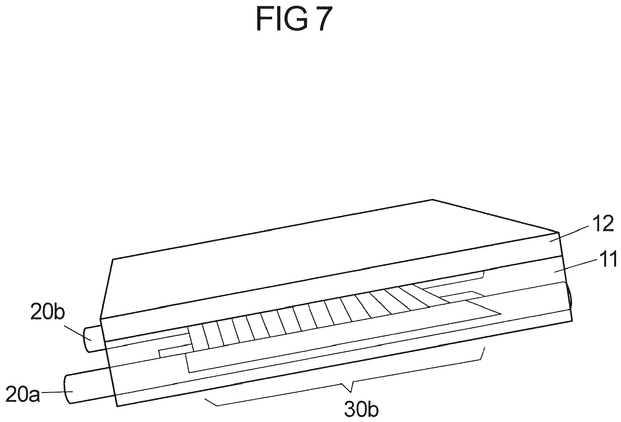

In der in den Figuren 6 und 7 gezeigten zweiten Ausführungsform des vorliegenden Sitzkissens, die nicht beansprucht wird, besteht das Stabilisierungsmittel aus mehreren voneinander beabstandeten Streifen 30b aus einem Gewebematerial. Die Anzahl der Streifen 30b ist dabei abhängig von der Größe des Sitzkissens und der Breite der Streifen, z.B. kann das Stabilisierungsmittel 5 bis 20 Streifen, bevorzugt 10 bis 15 Streifen, insbesondere bevorzugt 2 bis 5 Streifen umfassen.

In der gezeigten zweiten Ausführungsform sind die Streifen 30b mit zwei vertikal zu den Streifen verlaufenden Streben in der Art eines Lattenrostes verbunden (Fig. 7).

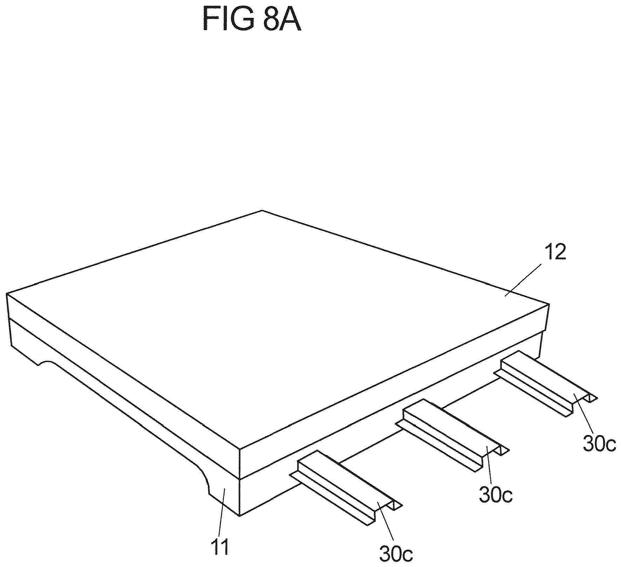

In der in den Figuren 8A-C gezeigten Ausführungsformen ist das Stabilisierungsmittel in Form von U-förmigen Trägerschienen 30c ausgebildet.

Die Trägerschienen 30c weisen ein U-Profil auf. Die Wanddicke der Trägerschienen beträgt zwischen 1,5 und 2 mm. Die Trägerschienen 30c bestehen aus Kohlenstofffasern oder Glasfasern. Die Fasern sind in ein Harzsystem eingelagert, wie z.B. in ein Phenolharz oder Epoxidharz. Die Profilierung der Trägerschienen kann z.B. durch Pressprägung von Fasernasslaminaten oder mittels dem Sheet Molding Compound (SMC) Verfahren erfolgen.

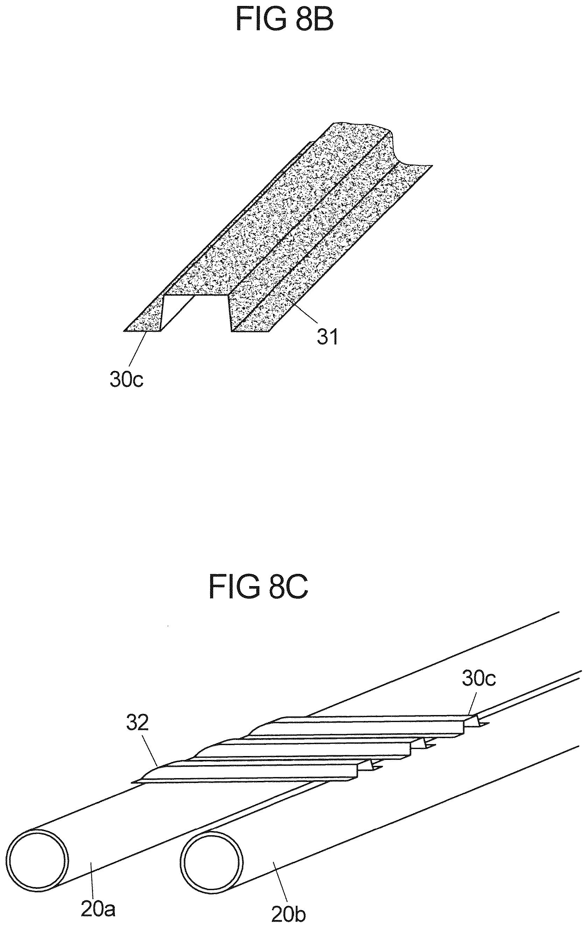

Die Trägerschienen 30c sind entweder aus einem flammfesten Material hergestellt oder sind zusätzlich mit einem Flammschutzmaterial in Form eines flammfesten Gewebes 31 aus temperaturstabilen Fasern sind Kunststofffasern auf der Basis von Polypropylen, Polyacrylat oder Polyamiden wie Aramiden oder Polybenzimidazol versehen. Hierzu können die Trägerschienen 30c mit dem flammfesten Gewebe 31 laminiert werden (siehe Figur 8B).

In der in Figur 8A gezeigten Ausführungsform sind 3 Trägerschienen parallel mit einem Mitte-Mitte-Abstand von 100 mm in einem Sitzkissen (mit einer Breite von 450 mm) gezeigt. Die Trägerschienen 30c weisen ein U-Profil oder ein Trapez-Profil auf. Die Tiefe des U-Profils bzw. Trapez-Profils liegt in einen Bereich zwischen 10 und 12 mm.

Ein Seitenende der Trägerschienen 30c wird mit einer Rundung 32 als Profil-Nase, versehen, um eine Schädigung des Schaumes durch scharfe Kanten zu verhindern. Die Profilrundung 32 ist bevorzugt auf der Sitzkissenvorderseite (d.h. im Kniekehlenbereich) vorgesehen, kann aber auch beidseitig möglich sein (Figur 8C, zur Vereinfachung ohne Polster dargestellt).

## Patentansprüche

1. Sitzkissen (1) für einen Fahrzeugsitz, insbesondere einen Flugzeugsitz umfassend mindestens ein Polster (10) umfassend mindestens eine erste Schicht (11) aus einem Kunststoffmaterial,
wobei in der mindestens einen ersten Kunststoffmaterialschicht (11) mindestens ein Stabilisierungsmittel (30) eingebettet ist, wobei das mindestens eine Stabilisierungsmittel (30) eine gegenüber der ersten Kunststoffmaterialschicht (11) höhere Biegesteifigkeit aufweist,
wobei das mindestens eine Stabilisierungsmittel voneinander beabstandete profilierte Trägerschienen umfasst,
**dadurch gekennzeichnet, dass**
die Trägerschienen ein U-Profil oder ein Trapez-Profil aufweisen, wobei die Trägerschienen (30c) aus Kohlenstofffasern oder Glasfasern bestehen, wobei die Fasern in ein Harzsystem eingelagert sind, und wobei die Trägerschienen durch Pressprägung von Fasernassmaterialien profiliert werden.

2. Sitzkissen nach Anspruch 1, **dadurch gekennzeichnet, dass** mindestens zwei, bevorzugt mindestens drei Trägerschienen (30c) parallel zueinander angeordnet sind.

3. Sitzkissen nach Anspruch 1 oder 2, **dadurch gekennzeichnet, dass** die Trägerschienen (30c) eine Wanddicke zwischen 0,5 mm und 5 mm, bevorzugt zwischen 1 und 4 mm, insbesondere bevorzugt zwischen 2 mm und 3 mm aufweisen.

4. Sitzkissen nach einem der vorhergehenden Ansprüche, **dadurch gekennzeichnet, dass** die Tiefe des U-Profils oder Trapez-Profils zwischen 5 und 15 mm, bevorzugt zwischen 10 und 12 mm liegt.

5. Sitzkissen nach einem der vorhergehenden Ansprüche, **dadurch gekennzeichnet, dass** die Trägerschienen (30c) mit einem Flammschutzmaterial (31) versehen sind.

6. Sitzkissen nach Anspruch 5, **dadurch gekennzeichnet, dass** das Flammschutzmaterial (31) aus einem flammfesten Gewebe aus Kunststofffasern oder aus einem flammfesten Gewebe aus mehreren Lagen aus feuerfestem Material und verpressten Textilien besteht.

7. Sitzkissen nach einem der vorhergehenden Ansprüche, **dadurch gekennzeichnet, dass** zumindest ein Seitenende der Trägerschienen (30c) mit einer Rundung versehen ist.

8. Sitzkissen nach einem der vorhergehenden Ansprüche, **dadurch gekennzeichnet, dass** die erste Kunststoffmaterialschicht (11) umfassend das mindestens eine Stabilisierungsmittel (30) mit mindestens einer weiteren zweiten Kunststoffmaterialschicht (12) gekoppelt ist.

9. Sitzkissen nach Anspruch 8, **dadurch gekennzeichnet, dass** die Kunststoffmaterialschichten (11, 12) unter Verwendung eines Klebers miteinander verbunden sind.

10. Sitzkissen nach Anspruch 8, **dadurch gekennzeichnet, dass** die Kunststoffmaterialschichten (11, 12) über mindestens ein Verbindungsmittel, insbesondere Haftbänder oder Flauschbänder, miteinander verbunden sind.

11. Sitzkissen nach einem der Ansprüche 8-10, **dadurch gekennzeichnet, dass** das Kunststoffmaterial der Schichten (11, 12) einen Kunststoffschaum, bevorzugt aus Polyurethanschaum, Polyethylenschaum, Polyetherschaum, Polyesterschaum, Silikonschaum oder aus einem Kunststoffgewebe, bevorzugt aus Polypropylen, Polyethylen, Poylacrylat umfasst.

12. Sitzkissen nach Anspruch 11, **dadurch gekennzeichnet, dass** in den Kunststoffschaum weitere Fasermaterialien, insbesondere hochtemperaturbeständige Fasern, eingebettet sind.

13. Sitzkissen nach einem der vorhergehenden Ansprüche, **dadurch gekennzeichnet, dass** das Polster (10) mit mindestens einem Trägerelement (20) als Teil eines Traggestells des mindestens einen Fahrzeugsitzes gekoppelt ist.

14. Sitzkissen nach Anspruch 13, **dadurch gekennzeichnet, dass** das Polster (10) an dem mindestens einem Trägerelement (20) mittels eines Befestigungsmittels befestigt ist.

15. Fahrzeugsitz, insbesondere Flugzeugsitz, umfassend mindestens ein Sitzkissen (1) nach einem der vorhergehenden Ansprüche.

## Claims

1. A seat cushion (1) for a vehicle seat, in particular an aircraft seat, comprising at least one bolster (10) comprising at least one first layer (11) made of a plastic material,
wherein in the at least one first plastic material layer (11) at least one stabilizing means (30) is embedded, wherein the at least one stabilizing means (30) has a higher bending stiffness with respect to the first plastic material layer (11), wherein the at least one stabilizing means comprises profiled carrier rails spaced apart from each other,
**characterized in that**
the carrier rails have a U-profile or a trapezoidal profile, wherein the carrier rails (30c) consist of carbon fibers or glass fibers, wherein the fibers are incorporated in a resin system, and wherein the carrier rails are profiled by press embossing of wet fiber materials.

2. The seat cushion according to claim 1, **characterized in that** at least two, preferably at least three carrier rails (30c) are arranged parallel to each other.

3. The seat cushion according to claim 1 or 2, **characterized in that** the carrier rails (30c) have a wall thickness between 0.5 mm and 5 mm, preferably between 1 mm and 4 mm, in particular preferably between 2 mm and 3 mm.

4. The seat cushion according to any of the preceding claims, **characterized in that** the depth of the U-profile or trapezoidal profile lies between 5 and 15 mm, preferably between 10 and 12 mm.

5. The seat cushion according to any of the preceding claims, **characterized in that** the carrier rails (30c) are provided with a flame-proofing material (31).

6. The seat cushion according to claim 5, **characterized in that** the flame-proofing material (31) consists of a flame-resistant fabric of plastic fibers or of a flame-resistant fabric of several layers of a refractory material and compressed textiles.

7. The seat cushion according to any of the preceding claims, **characterized in that** at least one side end of the carrier rails (30c) is provided with a rounding.

8. The seat cushion according to any of the preceding claims, **characterized in that** the first plastic material layer (11) comprising the at least one stabilizing means (30) is coupled with at least one further second plastic material layer (12).

9. The seat cushion according to claim 8, **characterized in that** the plastic material layers (11, 12) are connected with each other by using an adhesive.

10. The seat cushion according to claim 8, **characterized in that** the plastic material layers (11, 12) are connected with each other via at least one connecting means, in particular adhesive tapes or Velcro tapes.

11. The seat cushion according to any of claims 8-10, **characterized in that** the plastic material of the layers (11, 12) comprises a plastic foam, preferably made of polyurethane foam, polyethylene foam, polyether foam, polyester foam, silicone foam, or of a plastic fabric, preferably made of polypropylene, polyethylene, polyacrylate.

12. The seat cushion according to claim 11, **characterized in that** into the plastic foam further fiber materials, in particular high temperature-resistant fibers, are embedded.

13. The seat cushion according to any of the preceding claims, **characterized in that** the bolster (10) is coupled with at least one carrier element (20) as part of a supporting structure of the at least one vehicle seat.

14. The seat cushion according to claim 13, **characterized in that** the bolster (10) is attached to the at least one carrier element (20) by means of a fixing means.

15. A vehicle seat, in particular aircraft seat, comprising at least one seat cushion (1) according to any of the preceding claims.

## Revendications

1. Coussin de siège (1) pour un siège de véhicule, en particulier un siège d'avion, comprenant au moins un rembourrage (10) comprenant au moins une première couche (11) d'un matériau plastique,
au moins un moyen de stabilisation (30) étant incorporé dans ladite au moins une première couche de matériau plastique (11), ledit au moins un moyen de stabilisation (30) présentant une résistance à la flexion supérieure à celle de la première couche de matériau plastique (11), ledit au moins un moyen de stabilisation comprenant des rails de support profilés espacés les uns des autres,
**caractérisé en ce que**
les rails de support présentent un profile en U ou un profile trapézoïdal, les rails de support (30c) étant constitués de fibres de carbone ou de fibres de verre, les fibres étant incorporées dans un système de résine, et les rails de support étant profilés par estampage à la presse de matériaux fibreux humides.

2. Coussin de siège selon la revendication 1, **caractérisé en ce qu'**au moins deux, de préférence au moins trois rails de support (30c) sont agencés parallèlement les uns aux autres.

3. Coussin de siège selon la revendication 1 ou 2, **caractérisé en ce que** les rails de support (30c) présentent une épaisseur de paroi comprise entre 0,5 mm et 5 mm, de préférence entre 1 mm et 4 mm, en particulier de préférence entre 2 mm et 3 mm.

4. Coussin de siège selon l'une quelconque des revendications précédentes, **caractérisé en ce que** la profondeur du profile en U ou du profile trapézoïdal est comprise entre 5 et 15 mm, de préférence entre 10 et 12 mm.

5. Coussin de siège selon l'une quelconque des revendications précédentes, **caractérisé en ce que** les rails de support (30c) sont pourvus d'un matériau ignifuge (31).

6. Coussin de siège selon la revendication 5, **caractérisé en ce que** le matériau ignifuge (31) est constitué d'un tissu ignifugé en fibres synthétiques ou d'un tissu ignifugé composé de plusieurs couches de matériau réfractaire et de textiles comprimés.

7. Coussin de siège selon l'une quelconque des revendications précédentes, **caractérisé en ce qu'**au moins une extrémité latérale des rails de support (30c) est pourvue d'un arrondi.

8. Coussin de siège selon l'une quelconque des revendications précédentes, **caractérisé en ce que** la première couche de matériau plastique (11) comprenant ledit au moins un moyen de stabilisation (30) est couplée à au moins une autre deuxième couche de matériau plastique (12).

9. Coussin de siège selon la revendication 8, **caractérisé en ce que** les couches de matériau plastique (11, 12) sont reliées entre elles au moyen d'un adhésif.

10. Coussin de siège selon la revendication 8, **caractérisé en ce que** les couches de matériau plastique (11, 12) sont reliées entre elles par au moins un moyen de liaison, en particulier des bandes adhésives ou des bandes à boucles.

11. Coussin de siège selon l'une quelconque des revendications 8 à 10, **caractérisé en ce que** le matériau plastique des couches (11, 12) comprend une mousse de matière plastique, de préférence en mousse de polyuréthane, mousse de polyéthylène, mousse de polyéther, mousse de polyester, mousse de silicone ou en un tissu plastique, de préférence en polypropylène, polyéthylène, polyacrylate.

12. Coussin de siège selon la revendication 11, **caractérisé en ce que** d'autres matériaux fibreux, en particulier des fibres résistantes aux hautes températures, sont incorporés dans la mousse de matière plastique.

13. Coussin de siège selon l'une quelconque des revendications précédentes, **caractérisé en ce que** le rembourrage (10) est couplé à au moins un élément de support (20) faisant partie d'un cadre porteur d'au moins un siège de véhicule.

14. Coussin de siège selon la revendication 13, **caractérisé en ce que** le rembourrage (10) est fixé à l'au moins un élément de support (20) à l'aide d'un moyen de fixation.

15. Siège de véhicule, en particulier siège d'avion, comprenant au moins un coussin de siège (1) selon l'une quelconque des revendications précédentes.
